# EUROPÄISCHE PATENTANMELDUNG

(11) **EP 1 952 873 A1**
(43) Veröffentlichungstag der Anmeldung: **06.08.2008**
(21) Anmeldenummer: 08101249.4
(22) Anmeldetag: 04.02.2008
(51) Int. Cl.: B01D 46/24, B01D 46/00, B01D 46/52

(54) **Verfahren zur Herstellung eines Faltenfilters**

(30) Priorität: 02.02.2007 DE 102007006081
(71) Anmelder: MANN+HUMMEL GmbH, 71638 Ludwigsburg (DE)
(72) Erfinder: Rapp, Siegfried, 71711 Murr (DE)

(57) **Zusammenfassung**

Bei einem Verfahren zur Herstellung eines Faltenfilters wird in eine Filterbahn ein Faltenmuster eingebracht und es werden die Falten entlang dieses Faltenmusters eingeknickt, wobei zumindest ein Teil der Knicklinien des Faltenmusters durch Plastifzieren des Filtermaterials als Filmscharniere ausgebildet werden.

## Beschreibung

### Technisches Gebiet

Die Erfindung bezieht sich auf ein Verfahren zur Herstellung eines Faltenfilters gemäß Anspruch 1 und auf einen Faltenfilter gemäß Anspruch 10.

### Stand der Technik

Aus der FR 1 532 509 sind quaderförmige Filterelemente mit einer Vielzahl von Falten bekannt, die die Filteroberfläche und damit auch die Filtrierleistung erhöhen. Zur Herstellung dieses Faltenfilters wird eine ebene Filterbahn zwischen mehreren, hintereinander angeordneten Walzenpaaren hindurchgezogen, die jeweils auf ihrem Umfang Prägekanten zur Erzeugung von Präge- und Knicklinien in der Filterbahn aufweisen. Entlang der Präge- bzw. Knicklinien können die Falten ausgeknickt werden, wodurch das Filterelement seine endgültige, blockförmige und dreidimensionale Faltenstruktur erhält.

Aufgrund des Memory-Effektes des Materials der Filterbahn ist jedoch das gefaltete Filtermaterial bestrebt, wieder seinen ursprünglichen, ebenen Ausgangszustand einzunehmen. Bei der Erzeugung der Prägelinien wird das Filtermaterial mechanisch teilweise durchtrennt und/oder zusammengedrückt, wodurch eine bevorzugte Knickrichtung zur Erzeugung der Falten entsteht. Nach dem Ausknicken der Falten wirkt aber im Filtermaterial eine Kraft, die die Falten in Richtung des ebenen Ausgangszustandes beaufschlagt.

### Offenbarung der Erfindung

Der Erfindung liegt die Aufgabe zugrunde, einen Faltenfilter zu schaffen, der in einfacher Weise hergestellt werden kann und auch über eine lange Betriebsdauer seine Faltenform beibehält.

Diese Aufgabe wird erfindungsgemäß bei einem Verfahren zur Herstellung eines Faltenfilters mit den Merkmalen des Anspruches 1 und bei einem Faltenfilter mit den Merkmalen des Anspruches 12 gelöst. Die Unteransprüche geben zweckmäßige Weiterbildungen an.

Bei dem erfindungsgemäßen Verfahren wird das Faltenmuster in die aus Filtermaterial bestehende Filterbahn nicht im Wege des mechanischen Einprägens erzeugt, sondern es wird zumindest ein Teil der Knicklinien plastifiziert, wodurch Filmscharniere gebildet werden. Dies erfolgt beispielsweise durch Anschweißen des Filtermaterials. Die Knicklinien bzw. Filmscharniere bilden die Faltenkanten der Falten. Die Ausbildung von Filmscharnieren in den Knicklinien weist den Vorteil auf, dass die Schwenkbewegung um das Filmscharnier mit einem geringeren Kraftaufwand verbunden sein kann, so dass auch die Erzeugung der Falten in einfacherer Weise vonstatten geht als dies im Stand der Technik der Fall ist. Entsprechend kann auch das Bestreben des Filtermaterials, nach der Faltenbildung wieder die ursprüngliche Form einzunehmen, wodurch die Faltentiefe verkleinert werden würde, erheblich reduziert werden. Die durch den Memory-Effekt erzeugte Kraft, die das Filtermaterial wieder in den Ausgangszustand beaufschlagt, ist beim erfindungsgemäßen Verfahren bzw. dem Faltenfilter erheblich kleiner oder völlig eliminiert und kann gegebenenfalls ohne weiteres mithilfe einfacher konstruktiver Maßnahmen abgestützt werden.

Die plastifizierten Filmscharniere können in einfacher Weise hergestellt werden, da diese einen festen, integrierten Bestandteil des Filtermaterials bilden und lediglich durch Anschweißen des Filtermaterials erzeugt werden. Bei dem Anschweißen handelt es sich um einen Wärmeumformprozess, bei dem durch Wärmezufuhr bzw. Wärmeerzeugung das Filtermaterial lokal eng begrenzt entlang der gewünschten Knicklinien angeschmolzen wird. Dieses Anschweißen erfolgt insbesondere mittels Ultraschallschweißens, als Alternative kommen aber auch Infrarotschweißen oder eine externe Wärmezufuhr in Betracht.

In einer besonders vorteilhaften Ausführung wird die Filterbahn noch vor dem Anschweißen in die Faltenform gebracht, erst danach erfolgt das Anschweißen entlang der Knicklinien. Der Vorteil dieser Ausführungsvariante ist darin, dass der Memory-Effekt des Filtermaterials in diesem Fall zugunsten der Beibehaltung der Falten ausgenutzt wird. Da das Anschweißen an den bereits vorgeformten Falten erfolgt, hat das fertiggestellte Filterelement das Bestreben, ebendiese Faltenform beizubehalten.

Durch Variation der Herstellungsparameter wie Dauer und Intensität des Anschweißvorganges kann die Funktion und Wirkungsweise des Filmscharniers beeinflusst werden. So kann es beispielsweise vorteilhaft sein, bei der genannten Ausführungsvariante mit Anschweißen der bereits vorgefalteten Filterbahn den Plastifizierungsvorgang in der Weise zu steuern, dass das Filmscharnier eine festere Struktur hat, so dass die rotatorische Bewegungsmöglichkeit eingeschränkt ist. Umgekehrt ist es im Falle einer erst nach dem Anschweißen durchgeführten Faltenbildung vorteilhaft, die Filmscharniere guter Schwenkbeweglichkeit auszubilden, um die anschließende Faltenbildung zu unterstützen und erleichtern und den Memory-Effekt zu verringern.

Das Anschweißen im Anschluss an die Faltenbildung weist außerdem den Vorteil auf, dass die Länge des von äußeren Kräften unbelasteten Filterelementes mit verhältnismäßig hoher Genauigkeit festgelegt werden kann. Nach der Faltenbildung und dem anschließenden Anschweißen besitzt der Faltenfilter bereits seine endgültige Faltenstruktur, so dass auf die gewünschte Länge abgelängt werden kann. Durch die Falten im Filter wird ein Ziehharmonika-Effekt erreicht, der eine Längung und Stauchung des Faltenfilters ausgehend von der unbelasteten Länge erlaubt, die wieder eingenommen wird, sobald der Filter frei von äußeren Kräften ist.

Der Faltenfilter nimmt nach dem Erzeugen der Falten eine ebene bzw. quaderförmige, blockartige Geometrie ein. Wird dieses mit Falten versehene Filterelement zu einem Filterschlauch zusammengerollt, kann ein hohlzylindrisches Filterelement hergestellt werden, das von dem zu reinigenden Fluid radial zu durchströmen ist, wobei die bevorzugte Durchströmrichtung radial von außen nach innen verläuft, ggf. aber auch in Gegenrichtung erfolgen kann. Bei einer Anströmung radial von außen nach innen dient der Innenraum zur axialen Ableitung des filtrierten Mediums. Der schlauchförmige Faltenfilter weist üblicherweise Zylinderform auf, in Betracht kommen aber auch anderweitige Geometrien, wie z.B. Konusform oder über die axiale Länge wechselnde Durchmesser.

Wird das Filterelement zu einem Faltenschlauch zusammengerollt, so ist es zweckmäßig, die seitlichen Kantenbereiche des ursprünglichen Filterelementes miteinander zu verbinden, was insbesondere mittels Schweißens, bevorzugt Ultraschallschweißens durchgeführt wird. Hierbei kann es zweckmäßig sein, dass sich die seitlichen Kantenbereiche im zusammengerollten Zustand in Umfangsrichtung überlappen, so dass die regelmäßige Faltenstruktur in Umfangsrichtung beibehalten wird.

Die beschriebene Vorgehensweise zur Erzeugung des Faltenfilters eignet sich insbesondere für die Herstellung von Faltenfiltern, deren Faltenkanten bezogen auf die Längsachse des Filters schräg verläuft. Hierdurch wird dem vorteilhaft zu einem Schlauch zusammengerollten Filterelement eine balgförmige Struktur verliehen, so dass das Filterelement axial gedehnt und gestaucht werden kann, ohne die Falten zu zerstören. Außerdem besitzt ein derartiges Filterelement bezogen auf seine Längsachse eine flexible Struktur, die auch eine Verformung in Querrichtung erlaubt, so dass der Filterschlauch beispielsweise in Form eines Knies oder S-förmig verformt werden kann. Die schräg verlaufenden Kanten der Falten verbessern auch die Stabilität des Filterelementes, darüber hinaus wird die Filterfläche bezogen auf die axiale Länge des Filterelementes erhöht.

Der Faltenfilter aus natürlichem oder synthetischem Material besteht aus einer Filterbahn, in die Falten eingebracht sind, wobei die Faltenkanten der Falten als plastifizierte Filmscharniere ausgebildet sind, welche durch Anschweißen aus dem Filtermaterial gebildet sind.

### Kurze Beschreibung der Zeichnungen

Weitere Vorteile und zweckmäßige Ausführungen sind den weiteren Ansprüchen, der Figurenbeschreibung und den Zeichnungen zu entnehmen.

### Es zeigen:

Fig. 1 eine perspektivische Ansicht einer Filterbahn, in die parallel verlaufende Falten mit unteren und oberen, parallel zueinander liegenden Knicklinien eingebracht sind, wobei die Knicklinien jeweils als plastifizierte Filmscharniere ausgebildet sind,

Fig. 2 ein sternförmig zusammengefalteter Faltenfilter, der aus einer Filterbahn gemäß Fig. 1 durch Zusammenrollen und Verschweißen der seitlichen Kantenbereiche hergestellt wird,

Fig. 3 eine Ansicht einer schematisiert dargestellten Einrichtung zur Erzeugung der plastifizierten Filmscharniere mittels Ultraschallschweißens. Ausführungsformen der Erfindung

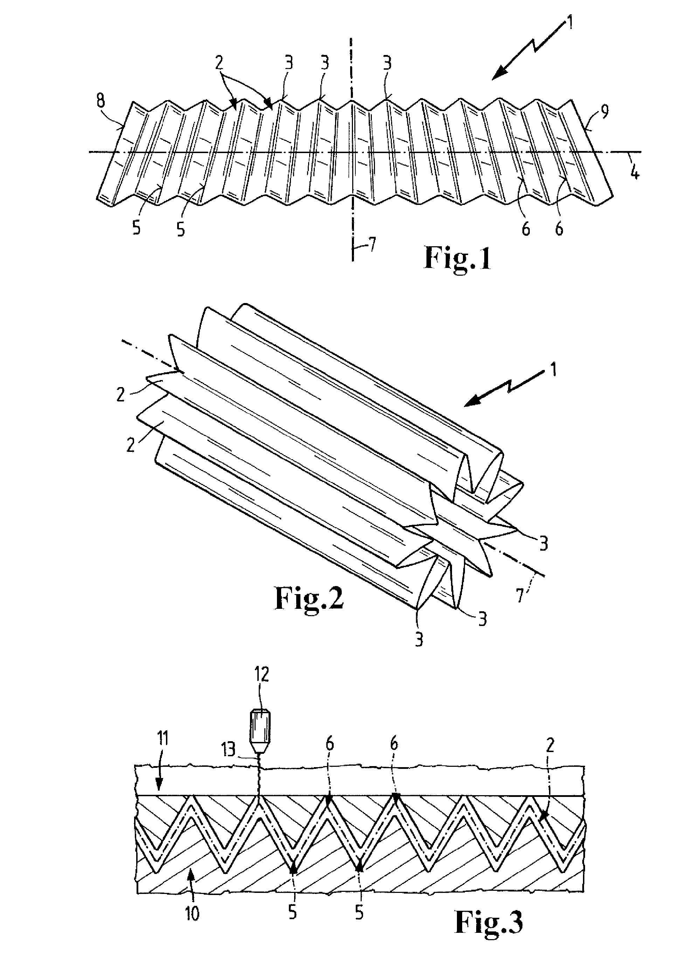

Das in Fig. 1 dargestellte Filterelement 1 ist als ebenes, blockförmiges Filterelement ausgebildet, bestehend aus einer Filterbahn 2 mit darin eingebrachten Falten 3, die zueinander parallel verlaufen. Eingezeichnet ist eine Achse 4, wobei sich die Falten 3 quer zur Achse 4 erstrecken. Definiert werden die Falten 3 durch untere Faltenkanten 5 und obere Faltenkanten 6, die parallel zueinander verlaufen und einander abwechseln. Bei der Achse 4 handelt es sich um eine quer verlaufende Achse, das Einbringen der Falten und die Transportrichtung der Filterbahn verläuft entlang der Achse 7, die sich im 90°-Winkel zur Achse 4 erstreckt.

Als Material für das Filterelement wird, ebenso wie in den nachfolgenden Ausführungsbeispielen, natürliches oder synthetisches Filtermaterial verwendet, beispielsweise Filtermaterial auf Zellulosebasis. Das Filtermaterial ist weich und nachgiebig ausgebildet und eignet sich insbesondere zum Durchführen eines lokal begrenzten Anschweißvorganges auf der Filterbahn, bei dem das Filtermaterial durch Anschmelzen plastifiziert wird.

In den Ausführungsbeispielen wird dieser Anschmelzvorgang entlang der unteren und oberen Faltenkanten 5 bzw. 6 durchgeführt, wodurch diese Knicklinien für die Falten 3 bilden. Die unteren und oberen Faltenkanten 5 bzw. 6 sind nach dem Anschweißen als plastifizierte Filmscharniere ausgebildet.

In Fig. 2 ist ein weiteres Ausführungsbeispiel eines Faltenfilters 1 dargestellt. Dieser Faltenfilter ist als sternförmiges, hohlzylindrisches Filterelement ausgeführt, das zweckmäßig aus dem ebenen Filterelement 1 nach Fig. 1 durch Zusammenrollen hergestellt wird. Hierbei werden die in Fig. 1 dargestellten, seitlichen Kantenbereiche 8 und 9 übereinandergelegt und miteinander verbunden, insbesondere miteinander verschweißt. Im zusammengerollten und verbundenen Zustand gemäß Fig. 2 verlaufen die Falten 3 in Richtung der Längsachse 7 des Filterelementes 1.

In Fig. 3 ist eine stark schematisierte Einrichtung zur Herstellung eines Filterelementes mit plastifizierten Filmscharnieren in den Faltenkanten dargestellt. Eine untenliegende Matrize 10 weist eine faltenförmige Oberflächenkontur auf, auf die die weiche und nachgiebige Filterbahn 2 gelegt wird. Auf die Filterbahn 2 wird von oben eine Gegenhalterung 11 gelegt, die die Filterform als Gegenkontur aufweist, so dass die Filterbahn 2 fest zwischen Matrize 10 und Gegenhalterung 11 eingespannt ist. Zur Erzeugung der Faltenkanten als plastifiziertes Filmscharnier wird eine Sonotrode 12 über die Kanten geführt und ein Ultraschall-Schweißstrahl 13 der Sonotrode 12 entlang der im Ausführungsbeispiel oberen Faltenkanten 6 geführt, wodurch die Faltenkanten 6 anschmelzen und das plastifizierte Filmscharnier gebildet wird. Die unteren Faltenkanten 5 können in entsprechender Weise über einen Ultraschall-Schweißstrahl als plastifiziertes Filmscharnier ausgeführt werden.

Der Faltenfilter eignet sich insbesondere für den Einsatz in einer Filtereinrichtung für die Filtration von Verbrennungsluft in Brennkraftmaschinen. Es ist aber auch eine Anwendung für die Filtration der Fahrzeuginnenraumluft oder allgemein für die Filtration in Fahrzeugen möglich.

## Patentansprüche

1. Verfahren zur Herstellung eines Faltenfilters aus einem natürlichen oder synthetischen Filtermaterial, wobei in eine Filterbahn (2) aus dem Filtermaterial ein Faltenmuster, bestehend aus Knicklinien in der Filterbahn (2), eingebracht und die Falten (3) entlang dieses Faltenmusters ausgeknickt werden, wobei zumindest ein Teil der Knicklinien plastifiziert wird und ein Filmscharnier bildet.

2. Verfahren nach Anspruch 1, **dadurch gekennzeichnet, dass** die Knicklinien durch Anschweißen des Filtermaterials als plastifizierte Filmscharniere ausgebildet werden.

3. Verfahren nach Anspruch 1 oder 2, **dadurch gekennzeichnet, dass** das Plastifizieren des Filtermaterials durch Ultraschallweißen durchgeführt wird.

4. Verfahren nach einem der Ansprüche 1 bis 3, **dadurch gekennzeichnet, dass** das Plastifizieren des Filtermaterials durch Infrarotschweißen durchgeführt wird.

5. Verfahren nach einem der Ansprüche 1 bis 4, **dadurch gekennzeichnet, dass** das Plastifizieren durch externe Wärmezufuhr erfolgt.

6. Verfahren nach einem der Ansprüche 1 bis 5, **dadurch gekennzeichnet, dass** die Filterbahn (2) vor dem Anschweißen in Faltenform gebracht wird, wobei die Faltenkanten (5, 6) der Falten (3) die Knicklinien darstellen, in denen durch Anschweißen die plastifizierten Filmscharniere ausgebildet werden.

7. Verfahren nach Anspruch 6, **dadurch gekennzeichnet, dass** die Filterbahn (2) auf eine Matrize (10) mit Faltenstruktur gelegt und anschließend in den Faltenkanten (5, 6) angeschweißt wird.

8. Verfahren nach einem der Ansprüche 1 bis 7, **dadurch gekennzeichnet, dass** die Filterbahn (2) nach dem Erzeugen der plastifizierten Filmscharniere zu einem Filterschlauch zusammengerollt wird.

9. Verfahren nach Anspruch 8, **dadurch gekennzeichnet, dass** das Zusammenrollen **dadurch** hergestellt wird, dass unter Verwendung eines Formwerkzeugs die seitlichen Kantenbereiche (8, 9) der Filterbahn (2) zusammengeführt werden.

10. Verfahren nach Anspruch 8 oder 9, **dadurch gekennzeichnet, dass** die seitlichen Kantenbereiche (8, 9) der Filterbahn (2) mittels Schweißens miteinander verbunden werden.

11. Verfahren nach einem der Ansprüche 8 bis 10, **dadurch gekennzeichnet, dass** die Falten (3) in der Weise in die Filterbahn (2) eingebracht werden, dass zumindest ein Teil der Faltenkanten (5, 6) im zusammengerollten Filterschlauch mit einer Längsachse (7) durch den Filterschlauch einen Winkel einschließen.

12. Faltenfilter aus einem natürlichen oder synthetischen Filtermaterial, bestehend aus einer Filterbahn (2), in die Falten (3) eingebracht sind, wobei die Faltenkanten (5, 6) der Falten (3) plastifiziert werden und Filmscharniere bilden.
